(19) Europäisches Patentamt
European Patent Office
Office européen des brevets

(11) **EP 2 182 343 B1**

(12) **FASCICULE DE BREVET EUROPEEN**

(45) Date de publication et mention de la délivrance du brevet:
**17.04.2019 Bulletin 2019/16**

(21) Numéro de dépôt: **09174241.1**

(22) Date de dépôt: **27.10.2009**

(51) Int Cl.:
*G01N 21/64* *(2006.01)*    *G01N 21/47* *(2006.01)*

(54) **Procédé et dispositif de mesure de caractéristiques optiques d'un objet**

Verfahren und Vorrichtung zum Messen der optischen Eigenschaften eines Gegenstands

Method and device for measuring the optical characteristics of an object

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **28.10.2008 FR 0857331**

(43) Date de publication de la demande:
**05.05.2010 Bulletin 2010/18**

(73) Titulaire: **Commissariat à l'Énergie Atomique et aux Énergies Alternatives 75015 Paris (FR)**

(72) Inventeurs:
- **Guyon, Laurent 38100, GRENOBLE (FR)**
- **Herve, Lionel 38700 Corenc (FR)**

(74) Mandataire: **Lavoix 62, rue de Bonnel 69448 Lyon Cedex 03 (FR)**

(56) Documents cités:
**GB-A- 2 416 945    US-A- 5 485 530**

- **SOLOVIEV V Y ET AL: "Fluorescence lifetime imaging by using time-gated data acquisition" APPLIED OPTICS 20071020 OPTICAL SOCIETY OF AMERICA US, vol. 46, no. 30, 20 octobre 2007 (2007-10-20), pages 7384-7391, XP002531917**
- **A. LAIDEVANT ET AL.: "Time-Resolved Imaging of a Fluorescent Inclusion in a Turbid Medium Using a Gated CCD Camera" BIOMEDICAL TOPICAL MEETING, 2006, page SH52, XP002531918**
- **D'ANDREA C ET AL: "Time-resolved optical imaging through turbid media using a fast data acquisition system based on a gated CCD camera" JOURNAL OF PHYSICS D (APPLIED PHYSICS) IOP PUBLISHING UK, vol. 36, no. 14, 21 juillet 2003 (2003-07-21), pages 1675-1681, XP002531919 ISSN: 0022-3727**
- **SCHWEIGER M ET AL: "Direct calculation with a finite-element method of the Laplace transform of the distribution of photon time of flight in tissue" APPLIED OPTICS OPT. SOC. AMERICA USA, vol. 36, no. 34, 1 décembre 1997 (1997-12-01), pages 9042-9049, XP002531920 ISSN: 0003-6935**
- **GRIBUTS C E W ET AL: "Optical property determination of turbid media by time-resolved transmittance measurements and wavelet transform analysis" CANADIAN JOURNAL OF ANALYTICAL SCIENCES AND SPECTROSCOPY SPECTROSC. SOC. CANADA CANADA, vol. 49, no. 3, 2004, pages 193-201, XP002531921 ISSN: 1205-6685**
- **J. MIZERET ET AL.: "Instrumentation for real-time fluorescence lifetime imaging in endoscopy" REVIEW OF SCIENTIFIC INSTRUMENTS, AIP, MELVILLE, NY, US, vol. 70, no. 12, 1 décembre 1999 (1999-12-01), pages 4689-4701, XP012037245 ISSN: 0034-6748**
- **TURNER GORDON ET AL: "Inversion with early photons", MEDICAL PHYSICS, AIP, MELVILLE, NY, US, vol. 34, no. 4, 21 March 2007 (2007-03-21), pages 1405-1411, XP012103378, ISSN: 0094-2405, DOI: 10.1118/1.2437103**

• SCHWEIGER M ET AL: 'Application of temporal filters to time resolved data in optical tomography' PHYSICS IN MEDICINE AND BIOLOGY IOP PUBLISHING UK vol. 44, no. 7, Juillet 1999, pages 1699 - 1717, XP055139185 ISSN: 0031-9155

**Description**

**Domaine technique**

La présente invention concerne le domaine technique de l'imagerie optique diffuse, et de son application à l'imagerie optique diffuse de fluorescence ou à la détermination de propriétés optiques de milieux diffusants. Elle peut notamment être appliquée à des échantillons de tissus biologiques ou à des parties du corps animal ou humain dont les dimensions sont compatibles avec les profondeurs de pénétration des rayonnements optiques utilisés.

**Art antérieur**

L'imagerie optique diffuse consiste généralement à déterminer la distribution de propriétés optiques d'un objet biologique vivant ou non pour en déduire l'existence ou non d'une pathologie. Il peut également s'agir de déterminer les propriétés optiques moyennes d'un milieu. Cette technique peut être mise en oeuvre directement sur l'objet biologique sans altération de sa composition chimique ou physique ou après injection de marqueurs fluorescents qui seront localisés.

Dans le domaine de la localisation de tumeurs, par exemple, la première technique consiste à exploiter le fait que les tumeurs sont des tissus hautement vascularisés avec un réseau sanguin anarchique. Cette forte vascularisation modifie localement les propriétés optiques d'absorption liées à la modification de la concentration en chromophores tels que l'hémoglobine, ou de diffusion davantage liées à la modification de la structure locale des structures diffusantes. Il s'agit alors d'utiliser une gamme de longueurs d'ondes d'un rayonnement non ionisant, tel qu'un rayonnement lumineux dans le rouge ou le proche infrarouge, où les tissus biologiques présentent un minimum d'absorption pour détecter la présence d'une zone anormalement absorbante et/ou diffusante.

La deuxième technique dite d'imagerie de fluorescence met, quant à elle, en oeuvre des marqueurs fluorescents spécifiques qui viennent se fixer de façon préférentielle sur des cellules cibles d'intérêt, par exemple des tumeurs cancéreuses. Les marqueurs fluorescents offrent alors un meilleur contraste de détection que celui par exemple offert par les zones hautement vascularisées utilisées dans la première technique. L'imagerie optique de fluorescence visera alors à localiser spatialement les marqueurs fluorescents tout en en déterminant la concentration, ce qui permettra indirectement de localiser la tumeur et d'obtenir des informations sur sa forme et sur son activité biologique.

L'imagerie optique diffuse peut-être utilisée en éclairant un milieu, comme un tissu biologique, avec une source de lumière, et détecter la lumière diffusée par le milieu. Selon le positionnement relatif de la source et du détecteur par rapport au milieu, on parlera d'imagerie en réflexion ou d'imagerie en transmission.

Il existe trois méthodes d'imagerie optique diffuse, qui se distinguent selon que la source de lumière utilisée soit continue, fréquentielle (i.e. dont l'intensité est modulée par une fonction sinusoïde du temps) ou puisée :
Les instruments utilisant une source de lumière continue ont été les premiers à être utilisés, la source de lumière étant une source blanche filtrée ou une source monochromatique, telle un Laser. On utilise alors des détecteurs ponctuels ou bidimensionnels mesurant l'intensité de la lumière réfléchie ou transmise par un tissu éclairé par la source lumineuse.

La seconde catégorie d'imagerie optique diffuse, dite imagerie fréquentielle, utilise une source de lumière modulée en intensité à une fréquence donnée. La source lumineuse est le plus souvent une source laser modulée en intensité à des fréquences f généralement comprises entre quelques dizaines de kHz à quelques centaines de MHz. Le détecteur utilisé, généralement modulé lui aussi en intensité à la même fréquence f que l'excitation ou à une fréquence harmonique, mesure à la fois l'amplitude du signal lumineux réfléchi ou transmis par le tissu, ainsi que la phase de ce signal lumineux par rapport celle de la source de lumière. Le brevet US 5485530 décrit un dispositif et un procédé d'imagerie de fluorescence que l'on peut classer dans cette catégorie. Cette demande décrit une modulation sinusoïdale de l'amplitude de la lumière d'excitation et du détecteur, les modulations de la source et du détecteur étant réalisées à une même fréquence ou à des fréquences harmoniques. On se ramène alors à une détection synchrone du signal de fluorescence, technique bien connue de l'homme du métier.

Enfin, la troisième catégorie d'imagerie optique diffuse est l'imagerie optique diffuse puisée, également appelée imagerie de optique diffuse impulsionelle, ou encore temporelle, ou encore résolue en temps. La source utilisée produit des impulsions lumineuses de courte durée, à un taux de répétition donné. Les sources utilisées peuvent être des diodes laser pulsées picosecondes, ou des lasers femtosecondes. La durée de l'impulsion étant généralement inférieure à 1ns, on parlera alors de sources lumineuses pulsées subnanosecondes. Le taux de répétition est le plus souvent compris entre quelques centaines de kHz et quelques centaines de MHz.

L'invention concerne cette troisième catégorie d'imagerie de fluorescence, dans la mesure où les inventeurs ont considéré que les données temporelles sont celles qui contiennent le plus de contenu informationnel sur le tissu ou l'objet traversé. Cette approche vise à enregistrer en chaque point d'acquisition l'histogramme représentant le temps d'arrivée des photons également appelé TPSF pour Temporal Point Spread Function encore appelé fonction d'étalement temporel. La méthodologie mise en oeuvre vise alors à extraire des paramètres simples de la TPSF dont l'expression théorique est connue pour ensuite résoudre un problème dit problème inverse de manière à retrouver la distribution des zones d'absorption, de diffusion ou encore de fluorescence.

Dans le cadre par exemple de l'imagerie de fluorescence résolue en temps, la lumière pénètre alors dans l'objet diffusant analysé par une première face tandis qu'un capteur de photons est situé en regard d'une seconde face de l'objet pour détecter les photons émis par cette seconde face consécutivement à l'excitation ou l'impulsion de lumière émise par la source. La seconde face peut-être identique à la première face, ce qui correspond à un mode de fonctionnement en réflexion. Le but des mesures sera donc de détecter la distribution temporelle de la lumière émise par la seconde face de l'objet et plus particulièrement le nombre de photons émis en fonction du temps sur une plage temporelle comprise entre un temps $T0$ correspondant à l'excitation et un temps $T0+D$ où $D$ peut par exemple être compris entre 1 et 20 ns et le plus souvent entre 5 et 10 ns. La durée de l'excitation étant inférieure à 1 ns, et pouvant être de l'ordre de la picoseconde ou de la femtoseconde, on comprendra alors que l'acquisition des photons émis est en grande partie, voire en totalité, réalisée lorsque la source d'excitation est éteinte, c'est-à-dire entre deux impulsions successives de cette source. Il peut également être envisagé de commencer les mesures avec un léger décalage $\varepsilon$, de l'ordre de la durée de l'impulsion lumineuse, et donc de commencer à mesurer à temps $T0+\varepsilon$, ce décalage permettant par exemple d'éviter que le photodétecteur soit ébloui par la source. Plusieurs techniques peuvent alors être envisagées pour déterminer cette distribution temporelle. Une première technique consiste à effectuer une détection du temps d'arrivée d'un premier photon à partir du temps d'émission de l'impulsion selon une méthode baptisée TCSPC pour Time Correlated Single Photon Counting. Selon cette méthode, il est effectué un grand nombre de mesures, chacune consistant à établir le temps d'arrivée d'un photon sur un détecteur par rapport à l'impulsion excitatrice. Au bout d'un grand nombre de mesures par effet statistique un histogramme $H(t)$ peut être constitué représentant le nombre de photons détectés en fonction du temps écoulé depuis l'excitation. Compte tenu du fait que la mesure est ponctuelle, il est nécessaire pour obtenir cet histogramme en plusieurs points de l'objet observé de procéder à un balayage spatial, ce qui induit un temps d'acquisition particulièrement important dépendant à la fois du nombre d'acquisitions nécessaires en chaque point et de la résolution spatiale recherchée. Afin de remédier à l'inconvénient lié à la résolution spatiale des mesures, il a été proposé de mettre en oeuvre à un capteur bidimensionnel qui permet de réaliser simultanément des mesures de type TCSPC en plusieurs points de l'espace comme cela est décrit dans un brevet US 5 485 530 [1]. Le capteur utilisé peut par exemple être une caméra rapide intensifiée utilisée de manière à obtenir un histogramme du nombre de photons détectés en fonction du temps écoulé depuis l'excitation et cela pour chaque pixel. Comme cela est décrit dans l'article « Fluorescence lifetime imaging by using time-gated data acquisition », Applied Optics 2007, vol.46, n°30, pp.7384-7391 by Soloviev et Al, il est alors mis en oeuvre sur cette caméra une porte temporelle prédéfinie de largeur temporelle $\sigma$ dont l'ouverture est successivement décalée, par rapport à l'excitation, d'un pas de décalage $P$ donné. Les premières mesures sont réalisées entre $T0$ et $T0+\sigma$, les secondes entre $T0+P$ et $T0+P+\sigma$, les énièmes entre $T0+nP$ et $T0+nP+\sigma$. Pour des raisons statistiques, il pourra être effectué plusieurs mesures pour une même porte temporelle. Il apparaît donc nécessaire de réaliser également un grand nombre de mesures pour obtenir un histogramme représentant la distribution temporelle des photons détectés pour chaque pixel d'une image correspondant à une partie de la surface de l'objet situé en face du capteur. A l'issue de ces acquisitions, il sera obtenu une matrice d'histogramme à partir de laquelle il sera possible de déterminer des grandeurs d'intérêts relatifs à l'objet diffusant examiné. Ces grandeurs peuvent par exemple correspondre à la répartition spatiale telle que le coefficient d'absorption $\mu_a$ ou encore le coefficient de diffusion réduit $\mu'_s$ ou la distribution spatiale des fluorophores dans l'objet observé.

La détermination de ces grandeurs d'intérêt est réalisée selon des techniques de traitement du signal connues de l'homme du métier et notamment décrites dans [1] ou encore dans « Méthode optique résolue en temps pour la tomographie de fluorescence dans les milieux de diffusants », thèse de doctorat d'université d'Aurélie Laidevant disponible sur tel.archives-ouverte.fr sous la référence tel-00122185 [2] et dans la bibliographie de cette thèse. Les traitements du signal mis en oeuvre visent par exemple mais non exclusivement à la détermination de Transformées de Mellin également appelées moments ou à la détermination de transformées de Laplace à partir de distributions enregistrées. Ainsi, chaque histogramme correspondant à un pixel de l'image enregistrée doit faire l'objet de calculs particulièrement consommateurs de ressources afin d'obtenir des données intermédiaires telles que précitées, moments et transformée de Laplace pour retrouver les grandeurs d'intérêts que sont par exemples les coefficients d'absorption, les coefficients de diffusion réduits ou la concentration de fluorophores.

Il est également connu dans l'état de la technique d'autres techniques exposées notamment dans les documents suivants :

- un article de J. MIZERET ET AL. intitulé "Instrumentation for real-time fluorescence lifetime imaging in endoscopy" REVIEW OF SCIENTIFIC INSTRUMENTS, AIP, MELVILLE, NY, US, vol. 70; no. 12, 1er décembre 1999 (1999-12-01), pages 4689-4701, ISSN: 0034-6748;
- un article de A. LAIDEVANT ET AL. intitulé "Time-Resolved Imaging of a Fluorescent Inclusion in a Turbid Medium Using a Gated CCD Caméra" BIOMEDICAL TOPICAL MEETING, 2006, page SH52;
- un article de D'ANDREA C ET AL. intitulé "Time-resolved optical imaging through turbid media using a fast data acquisition systme based on a gated CCD camera" JOURNAL OF PHYSICS D (APPLIED PHYSICS) IOP PUBLISHING UK, vol. 36, no. 14, 21 juillet 2003 (2003-07-21), pages 1675-1681, ISSN: 0022-3727;

- la demande de brevet de numéro GB 2 416 945;
- un article de GRIBUTS C E W ET AL. intitulé "Optical property détermination of turbid media by time-resolved transmittance measurements and wavelet transform analysis" CANADIAN JOURNAL OF ANALYTICAL SCIENCES AND SPECTROSCOPY SPECTROSC. SOC. CANADA CANADA, vol. 49, no. 3, 2004, pages 193-201, ISSN: 1205-6685;
- un article de TURNER GORDON ET AL. intitulé "Inversion with early photons" MEDICAL PHYSICS, AIP, MELVILLE, NY, US, vol. 34, no. 4, 21 mars 2007 (2007-03-21), pages 1405-1411, ISSN: 0094-2405, DOI: 10.1118/1.2437103, et
- un article de SCHWEIGER M ET AL. intitulé "Application of temporal filterst o time resolved data in optical tomography" PHYSICS IN MEDICINE AND BIOLOGY IOP PUBLISHING UK, vol. 44, no. 7, 7 juillet 1999 (1999-07), pages 1699-1717, ISSN:0031-9155.

Il apparaît donc le besoin d'un procédé et d'un dispositif qui permettent, d'une part, de réduire le nombre d'acquisitions nécessaires à la production des mesures utiles pour la détermination des grandeurs d'intérêt et, d'autre part, réduire le nombre de fichiers enregistrés et donc leur temps de traitement, résultant principalement de leur temps de lecture, pour aboutir auxdites grandeurs d'intérêt.

## Exposé de l'invention

Afin d'atteindre cet objectif, l'invention concerne un procédé de mesure de caractéristiques optiques d'un objet selon l'une des revendications 1 à 5 ainsi qu'un dispositif de mesure de caractéristiques optiques selon l'une des revendications 6 à 10.

Ce procédé de mesure comprend les opérations suivantes :

- illumination de l'objet au moyen d'un rayonnement lumineux à l'aide d'une source lumineuse puisée,
- acquisition d'une image par une détection modulée de rayonnements lumineux en provenance de l'objet consécutivement à l'illumination, la détection étant modulée selon une fonction de modulation d'acquisition G(t) temporelle continue et non sinusoïdale, l'acquisition étant réalisée en dehors de la phase d'illumination par la source lumineuse

Il doit être compris que la modulation de l'acquisition est également réalisée en dehors des phases d'émission de lumière par la source lumineuse. L'expression « en dehors » signifie que la partie la plus significative de l'étape en question, acquisition ou modulation, est réalisée consécutivement à l'émission d'une impulsion lumineuse et avant l'émission d'une nouvelle impulsion lumineuse.

L'expression « fonction continue » désigne une fonction telle que f(x) tend vers $f(x_0)$ quand x tend vers $x_0$.

Selon un exemple, la source de lumière est une source pulsée subnanoseconde et l'acquisition est réalisée entre deux impulsions lumineuses successives.

Selon un exemple, la détection est modulée selon une fonction de modulation d'acquisition adaptée pour que le résultat de l'acquisition modulée soit directement une caractéristique optique de l'objet en chaque point ou pixel de l'image ou une grandeur intermédiaire permettant de calculer plus rapidement cette caractéristique que selon les techniques antérieures.

Ainsi la modulation de l'acquisition réalisée lors de chaque illumination permet d'obtenir pour chaque pixel une grandeur fonction d'une caractéristique optique d'intérêt de l'objet illuminé sans qu'il soit nécessaire de procéder à des traitements mathématiques des acquisitions de sorte qu'avec une seule acquisition, il est possible d'obtenir directement une grandeur d'intérêt ou une grandeur intermédiaire, là où selon l'art antérieur il convenait d'effectuer un grand nombre d'acquisitions pour obtenir pour chaque pixel un histogramme de répartition temporelle des photons, chaque histogramme devant ensuite subir un traitement numérique de manière à obtenir la grandeur optique d'intérêt.

Il apparaît donc que la mise en oeuvre du procédé décrit dans la présente description permet de réduire substantiellement les ressources ou les temps de traitement nécessaires à l'obtention des caractéristiques optiques d'intérêt.

Selon un exemple de procédé de mesure, l'illumination comprend l'émission d'une impulsion lumineuse de durée p et l'acquisition est effectuée consécutivement à l'émission de l'impulsion lumineuse pour une durée T=xp et avant toute nouvelle illumination. x pourra par exemple être choisi pour être supérieur à 10 par exemple.

Ainsi, suite à une impulsion lumineuse émise à l'instant t0, la grandeur S enregistrée au niveau de chaque point ou pixel de l'image aura pour valeur :

$$S = \int_{t0}^{t0+T} G(t)H(t)dt$$

où :

- G(t) est la fonction de modulation de l'acquisition
- et H(t) l'histogramme de temps d'arrivée des photons au niveau du pixel considéré.

G(t) sera donc une fonction temporelle.

Selon un exemple, la fonction G(t) peut être de différentes natures selon la grandeur caractéristique recherchée.

Ainsi pour obtenir la transformée de Mellin de la fonction H(t), on utilise la fonction G(t) du type $G_k(t) = at^k$ où a est un nombre réel positif et k un nombre entier. L'utilisation d'une telle fonction permet de calculer le $k^{ième}$ moment selon la valeur choisie pour k.

Pour obtenir la transformée de Laplace, la fonction de modulation de l'acquisition est choisie pour être du type $G_c(t) = a'e^{-tc}$ où a' est un nombre réel positif et c un nombre réel.

Par ce même procédé, on peut également obtenir une transformée en ondelettes telles que par exemple les ondelettes splines, les ondelettes de Haar, de Coifmann, de Daubechies. La fonction de modulation de l'acquisition peut également être choisie comme étant une ondelette gaussienne telle que définie par la formule :

$$G_n(t) = a(-1)^n \frac{d^n e^{\frac{t^2}{2}}}{dt^n}$$

où n est un entier positif ou nul.

Selon un exemple, la fonction de modulation peut être une fonction toujours de même signe par exemple positif ou au contraire une fonction présentant une ou plusieurs parties positives et une ou plusieurs parties négatives. Cependant, les dispositifs utilisés pour assurer la modulation de l'acquisition ne sont pas toujours en mesure de fournir des valeurs de modulation négatives. Afin de répondre à cette problématique selon une variante de mise en oeuvre, le procédé de mesure décrit à titre d'exemple comprend au moins:

- Une première phase d'illumination et d'acquisition au cours de laquelle l'acquisition est modulée selon une première fonction de modulation d'acquisition, et une première image de caractéristiques ou grandeurs optiques de l'objet est enregistrée,
- Une deuxième phase d'illumination et d'acquisition au cours de laquelle l'acquisition est modulée selon une deuxième fonction de modulation d'acquisition, et une deuxième image, de même dimension que la première, de caractéristiques ou grandeurs optiques de l'objet est enregistrée,
- Une étape de génération d'une troisième image, de même dimension que la première, de caractéristiques optiques de l'objet obtenue par soustraction à la première image de la deuxième image.

Ainsi, si la fonction de modulation de l'acquisition G(t) peut être décomposée en une partie positive $G_+(t)$ et en une partie négative G-(t) la première acquisition pourra être réalisée en mettant en oeuvre comme fonction de modulation de l'acquisition la partie positive $G_+(t)$ tandis que la deuxième acquisition pourra être mise en oeuvre en utilisant comme fonction de modulation de l'acquisition la valeur absolue de la fonction $G_-(t)$. Ainsi le résultat de l'étape génération de la troisième image correspondant à la soustraction de l'image de la deuxième étape acquisition à l'image de la première étape acquisition correspondra pour chaque pixel à la valeur qui aurait été obtenue pour une acquisition modulée avec la fonction G(t). Il est ainsi possible de contourner les impossibilités physiques liées au dispositif de modulation de l'acquisition.

Selon une mise oeuvre décrite à titre d'exemple, le procédé comprend :

- plusieurs phases d'illumination et d'acquisition modulées avec enregistrement à chaque phase d'une image,
- et une étape de reconstruction des caractéristiques optiques de l'objet à partir des images enregistrées.

Ainsi, en changeant de fonction de modulation de l'acquisition à chaque séquence d'illumination/acquisition, il est possible d'obtenir une caractéristique optique d'intérêt qui pourra ensuite être utilisée pour une reconstruction de grandeurs optiques de l'objet analysé.

Selon un exemple, l'acquisition peut être réalisée tant en transmission qu'en réflexion. Lorsque le procédé est mis en oeuvre en transmission, l'acquisition est alors effectuée en collectant les photons issus d'une face différente de celle illuminée par la source, par exemple par la face opposée. Dans le cas contraire, on parle de mesure en réflexion, l'illumination et l'acquisition sont effectuées de telle sorte que l'imageur image la face éclairée par la source. Selon un exemple, chaque image enregistrée est bidimensionnelle.

Selon un exemple, le procédé peut être mis en oeuvre pour des analyses tomographiques optiques classiques ou au contraire pour des analyses tomographiques de fluorescence. Dans ce dernier cas, l'objet comprendra alors au moins un marqueur fluorescent.

La description décrit également un dispositif de mesure de caractéristiques optiques d'un objet situé dans une zone de mesure. Ce dispositif de mesure comprend alors au moins :

- une source de lumière pulsée adaptée pour émettre un rayonnement lumineux en direction de la zone de mesure,
- des moyens d'acquisition d'une image de la zone de mesure qui comprennent un capteur adapté pour d'acquérir au moins une mesure en au moins un point ou pixel, et des moyens de modulation de l'acquisition interposés entre le capteur et la zone de mesure,
- une unité de contrôle et d'acquisition synchronisée avec la source de lumière et raccordée au capteur d'acquisition et aux moyens de modulation de l'acquisition.

Selon un exemple, l'unité de contrôle et d'acquisition est adaptée pour effectuer l'acquisition en dehors de phase d'émission de rayonnement lumineux par la source de lumière et pour commander, à chaque acquisition, les moyens de modulation de l''acquisition selon une fonction temporelle continue et non sinusoïdale de modulation d'acquisition. La fonction temporelle de modulation continue est adaptée pour que le résultat de chaque acquisition modulée soit directement une caractéristique optique de l'objet en chaque point ou pixel de l'image ou une grandeur intermédiaire permettant de calculer plus rapidement cette caractéristique.

Selon un exemple, le capteur peut être adapté pour acquérir une image ponctuelle ou quasi ponctuelle de l'objet et comprendra un seul pixel ou pourra être assimilé à un seul pixel soit un capteur de dimension nulle. Le capteur peut également être constitué par une barrette de capteurs ponctuels et correspondre alors à une rangée de pixels, soit un capteur de dimension une. Le capteur peut encore comprendre une matrice de capteurs ponctuels et correspondre alors à une matrice de pixels soit un capteur de dimension deux ou bidimensionnel. Ainsi le terme image est employé dans le cadre de la description pour désigner un objet de dimension nulle, une ou deux, dans le cadre de l'acquisition, voire trois après reconstruction.

Selon un exemple, les moyens de modulation de l'acquisition peuvent être réalisés de toute façon appropriée et par exemple faire partie intégrante du capteur en étant situé en amont de la surface sensible de ce dernier ou encore être placés en amont du capteur selon le sens de circulation des photons en provenance de la zone de mesure.

Ainsi, selon une variante de réalisation du dispositif de mesure, les moyens de modulation de l'acquisition comprennent un intensificateur d'image et des moyens de contrôle du gain de l'intensificateur pilotés par l'unité de contrôle et d'acquisition qui est alors adaptée pour faire varier le gain de l'intensificateur conformément à la fonction de modulation de l'acquisition.

Selon une autre variante de réalisation du dispositif de mesure, les moyens de modulation comprennent un atténuateur optique variable associé à des moyens de contrôle du coefficient d'atténuation pilotés par l'unité de contrôle et d'acquisition qui est alors adaptée pour faire varier le coefficient d'atténuation conformément à la fonction de modulation de l'acquisition.

Selon un exemple, l'unité de contrôle du dispositif de mesure est adaptée pour mettre en oeuvre un procédé de mesure tel que décrit précédemment.

**Brève description des figures**

La figure 1 est une vue schématique d'un dispositif de mesure par transmission des caractéristiques optiques d'un objet tel que, par exemple, un échantillon biologique à analyser ou encore un échantillon de test également appelé fantôme.

La figure 2 est une vue schématique et de principe d'une caméra intensifiée utilisée en tant que moyen d'acquisition du dispositif de mesure illustré à la figure 1.

La figure 3 est une vue d'un histogramme H(t) représentant le temps d'arrivée des photons pour un point ou pixel du capteur bidimensionnel mis en oeuvre par les moyens d'acquisition.

La figure 4 est une représentation schématique d'exemple d'une loi de modulation de l'acquisition ayant une partie positive et une partie négative.
La figure 5 est une vue schématique d'un dispositif de mesure in vivo par transmission.
La figure 6 est une vue schématique d'un exemple de dispositif de mesure par réflexion.

Les éléments communs aux différentes figures et formes des modes de réalisation décrits ultérieurement portent les mêmes références numériques.

## Description détaillée de modes de réalisation spécifiques

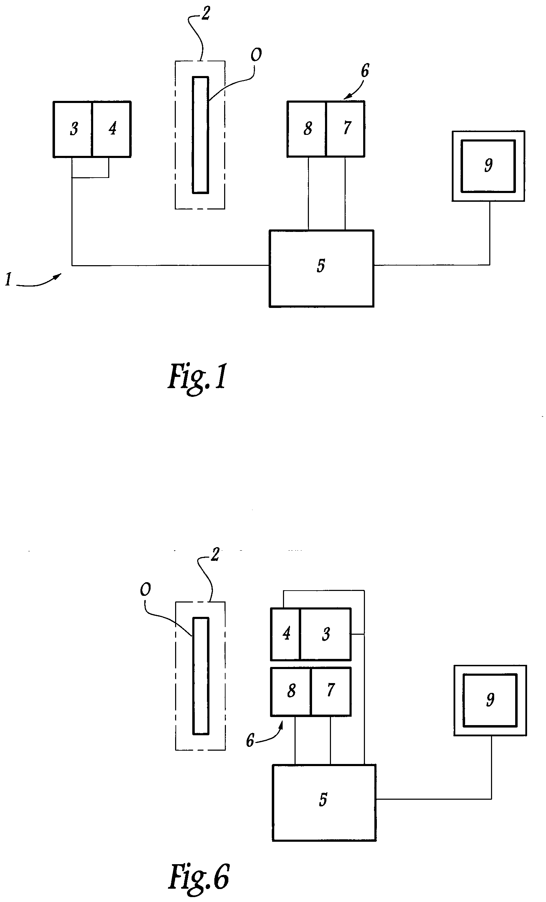

Un dispositif de mesure selon un exemple particulier, tel qu'illustré à la figure 1 et désigné dans son ensemble par la référence 1, comprend une zone de mesure 2 schématisée en traits mixtes au niveau de laquelle est placé un objet O qui peut être un échantillon de nature biologique ou autre dont des caractéristiques optiques doivent être déterminées. Dans le cadre de mesure in vivo, l'objet O peut également être formé par toute ou partie d'un organisme vivant tel qu'un petit animal ou une partie de corps humain.

Le dispositif de mesure 1 comprend une source de lumière 3 adaptée pour émettre un rayonnement lumineux en direction de la zone de mesure pour illuminer l'objet O. La source de lumière 3 est une source puisée, de préférence subnanoseconde, et peut générer une lumière ponctuelle sur au moins une face de l'objet O. Elle peut par exemple comprendre une source lumineuse associée à une cavité laser de manière à émettre un rayonnement pulsé possédant une longueur d'onde de 635 nm et un taux de répétition de 80MHz. La source de lumière 3 est associée à des moyens de synchronisation 4 et se trouve pilotée par une unité 5 de contrôle et d'acquisition raccordée aux moyens de synchronisation. Une ou plusieurs fibres optiques peuvent guider la lumière entre la source de lumière et au moins une partie d'une face de l'objet O. Dans ce cas, on pourra assimiler l'extrémité de la fibre, ou des fibres, située(s) à proximité de l'objet à une source de lumière secondaire.

Le dispositif de mesure 1 comprend également des moyens d'acquisition 6 d'une image de la zone de mesure 2. Selon l'exemple illustré, le dispositif de mesure 1 travaille en transmission, aussi la source de lumière et les moyens d'acquisition sont disposés de part et d'autre de la zone de mesure 2 et de préférence mais non nécessairement en regard les uns des autres. Les moyens d'acquisition 6 comprennent alors un capteur 7 comprenant au moins un pixel et de préférence mais non exclusivement une matrice bidimensionnelle de pixels. Par matrice dimensionnelle, il faut entendre au moins une ligne de pixel et de manière plus particulièrement préférée un ensemble de lignes et de colonnes de pixels. Le capteur 7 est également piloté par l'unité 5 qui est adaptée pour en assurer le contrôle et enregistrer les mesures réalisées par chacun des points ou pixels du capteur 7. Ce capteur 7 réalise l'image d'une partie d'une face de l'objet O, par l'intermédiaire d'un dispositif optique, tel une ou plusieurs lentilles ou par l'intermédiaire d'au moins une fibre optique. Les moyens d'acquisition 6 comprennent également des moyens 8 de modulation de l'acquisition qui sont interposées entre le capteur 7 et la zone de mesure 2. Les moyens de modulation de l'acquisition 8 sont également pilotés par l'unité 5 qui en outre peut être raccordée à des moyens de visualisation 9 tel qu'un écran vidéo.

L'unité de contrôle et d'acquisition 5 peut être réalisée de toute manière appropriée telle que par exemple sous la forme d'un système électronique dédié ou encore être formée par un microordinateur comprenant toutes les cartes d'acquisition et de contrôle ainsi que les ressources de calcul, de mémoire et logicielles nécessaires à la mise oeuvre du procédé tel que décrit en étant notamment adapté pour piloter et contrôler la source de lumière et les moyens de modulation de l'excitation ainsi que les moyens d'acquisition.

Selon l'exemple illustré, le dispositif de mesure 1 travaille en transmission, aussi la source de lumière et les moyens d'acquisition sont disposés de part et d'autre de la zone de mesure 2 et de préférence mais non nécessairement en regard les uns des autres.

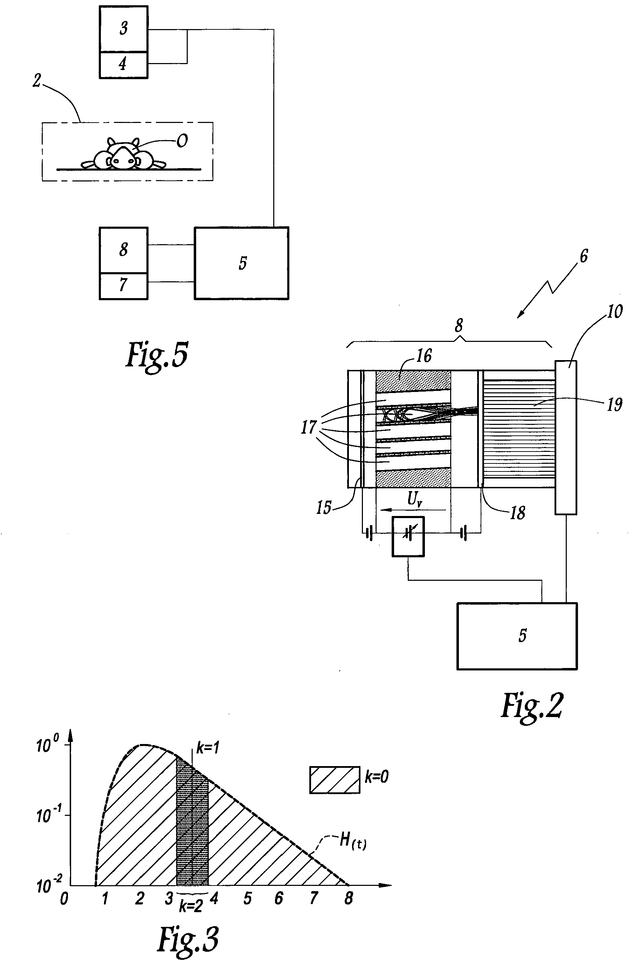

Selon un exemple, les moyens d'acquisition peuvent être réalisés de toute manière appropriée et dans le cadre de l'exemple illustré figure 1, les moyens d'acquisition 6 comprennent une caméra intensifiée ultrarapide telle que par exemple une camera de type « High Rate Imager» commercialisée par la société Kentech Instrument limited. Une telle caméra intensifiée comprend, comme le montre schématiquement la figure 2, en tant que moyen de modulation de l'acquisition, un tube intensificateur de lumière 8 couplé optiquement à un capteur tel qu'un capteur matriciel CCD 10. Le tube intensificateur 8 comprend au niveau de la face orientée en direction du rayonnement incident à l'opposé du capteur 10 une photocathode 15 destinée à émettre des électrons à la réception de photons. La photocathode 15 est suivie d'une galette 16 pourvue de micro canaux 17 dont la taille a été volontairement exagérée à la figure 2. Le tube 8 comprend en aval de la galette 16 un écran fluorescent polarisé 18 destiné à émettre des photons sous l'impact des électrons issus de la galette 16. L'écran fluorescent 18 est ici couplé au capteur 10 par un faisceau de fibres optiques 19, étant entendu que l'écran 18 pourrait également être en contact immédiat avec la surface photosensible du capteur 9, ou couplé avec un objectif. Afin d'assurer le transfert et l'amplification des électrons émis par la photocathode jusqu'à l'écran fluorescent 18, une différence de potentiel constante est maintenue entre la photocathode 15 et la face avant de la galette 16 ainsi qu'entre la face arrière de la galette 16 et l'écran fluorescent 18. Par ailleurs, il est appliqué entre la face avant et la face arrière de la galette 16 une différence de potentiel variable $U_v$ qui peut être modulée de manière à faire varier le gain G(t) de l'intensificateur 8. Le pilotage de la différence de potentiel $U_v$ est alors réalisé par l'unité 5.

Le dispositif de mesure ainsi constitué est adapté pour mettre en oeuvre le procédé de mesure décrit de la manière suivante.

Le laser émet des impulsions d'excitation pouvant avoir une durée de plusieurs dizaines de picosecondes par exemple comprise entre 40 fs et 100 ps, cette durée étant mesurée à mi-hauteur de la valeur maximale de la courbe de l'intensité instantanée de l'impulsion. Bien entendu, il peut être également utilisé en tant que source lumière un laser femtoseconde. La synchronisation laser assurée par les moyens 4 déclenche l'acquisition au niveau du capteur 7 pour une durée T de l'ordre de quelques nanosecondes à quelques dizaines de nanosecondes par exemple pour une durée comprise entre 5 et 10 ns, ce qui pour une impulsion de 50 ps représente une durée d'acquisition de plus de cent fois la durée d'impulsion. Pendant cette période d'acquisition s'écoulant de t0 à t0+T, ou, dans certains cas, t0 + ε à t0 + T l'unité 5 pilote la valeur de différence de potentiel $U_v$ entre les plans d'entrée et de sortie de la galette à microcanaux 16 de manière à faire varier le gain ou la sensibilité de l'intensificateur 8 selon une loi de modulation temporelle continue G(t). Ainsi, la quantité de lumière reçue au niveau de chaque pixel du capteur 10 correspondra à :

$$S = \int_{t0}^{t0+T} G(t)H(t)dt$$

Selon la nature de la loi de modulation G(t), il sera alors possible par exemple d'obtenir directement sans calcul ultérieur et pour chaque pixel du capteur une caractéristique optique de l'objet O ou par exemple d'obtenir une grandeur intermédiaire fonction d'une caractéristique optique.

Ainsi, par exemple, la fonction de modulation de l'acquisition pourra être choisie comme étant une transformée de Melin du type $G(t) = t^k$.

Lors d'une première acquisition, k pourra être choisi pour avoir une valeur égale à 0, de sorte que le signal S enregistré au niveau de chaque pixel du capteur vaudra :

$$S_0 = \int_{t0}^{t0+T} H(t)dt$$

qui est également appelé le moment d'ordre zéro et correspond à l'intégration des temps d'arrivée des photons soit la surface hachurée de la figure 3.

Lors d'une deuxième acquisition, la valeur de k pourra être choisie à 1 et la valeur mesurée S pour chaque pixel correspondra à :

$$S_1 = \int_{t0}^{t0+T} tH(t)dt$$

qui est également appelé premier moment. Ainsi, en faisant le rapport S1 et So, on obtient le temps moyen d'arrivée des photons au niveau du capteur tel que représenté par le segment vertical à la figure 3.

Lors d'une troisième acquisition, k pourra être choisi égal à 2 aussi pour chaque pixel du capteur 9, la valeur mesurée correspondra à :

$$S_2 = \int_{t0}^{t0+T} t^2 H(t)dt$$

également appelée deuxième moment qui est lié à la variance d'arrivée des photons au niveau du capteur 9 tel que figuré par la zone gris foncé à la figure 3. Les valeurs du moment d'ordre zéro, du premier moment et du deuxième moment pour chacun des pixels peuvent alors être utilisés pour construire les caractéristiques optiques de l'objet selon des méthodes mathématiques dites du problème inverse comme exposé dans la publication de F. Lan, S. Lessage et X. Intes « Time Domain fluorescent Diffuse Optical Tomography : analytical expressions » publiée le 4 avril 2005 au volume 13, numéro 7 d'Optics Express page 2263, ou encore exposé dans [2] et les documents de la bibliographie de [2].

Il peut également être effectuée une acquisition en utilisant comme fonction de modulation de l'acquisition la fonction $G(t) = e^{-ts}$ de sorte que la valeur mesurée au niveau de chaque pixel sera égale à :

$$S_s = \int_{t0}^{t0+T} e^{-ts} H(t)dt$$

ce qui correspond à une transformée de Laplace de l'histogramme H(t) des temps d'arrivée des photons au niveau de chaque pixel du capteur.

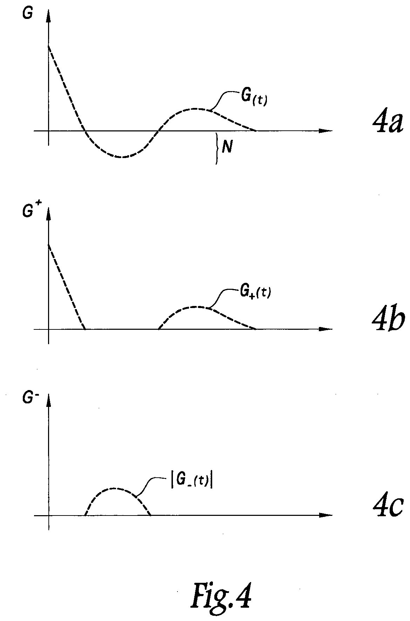

Bien entendu, il peut être mis en oeuvre d'autres types de loi de modulation comme par exemple une loi de modulation G(t) telle qu'illustrée graphiquement à la figure 4a. Une telle loi de modulation fait apparaître une partie $G_+(t)$ de gain positif (figure 4b) et une partie G-(t) de gain négatif. Or, le tube intensificateur 16 n'est pas en mesure d'engendrer un tel gain négatif. Aussi, dans l'exemple décrit, G(t) est décomposée sous la forme G(t) = $G_+(t)$ + G_(t) où $G_+(t)$ est la partie positive du gain et G-(t) la partie négative du gain.

Il sera alors effectué une acquisition avec comme fonction de modulation $G_+(t)$ de sorte que pour chaque pixel du capteur la grandeur mesurée vaudra :

$$S_+ = \int_{t0}^{t0+T} G_+(t)H(t)dt$$

Il sera ensuite effectué une acquisition avec comme fonction de modulation la valeur absolue de G-(t) qui est positive de sorte que pour chaque pixel du capteur la grandeur mesurée vaudra :

$$S_- = \int_{t0}^{t0+T} \left|G_-(t)\right| H(t)dt$$

Enfin, en soustrayant les deux quantités obtenues (électroniquement ou numériquement en post-traitement), on obtient :

$$S = S_+ - S_- = \int_{t0}^{t0+T} G_+(t)H(t)dt - \int_{t0}^{t0+T} \left|G_-(t)\right| H(t)dt = \int_{t0}^{t0+T} G(t)H(t)dt$$

Ce qui correspond bien à un signal temporel pondéré par une fonction pouvant avoir des parties négatives.

Selon l'exemple décrit précédemment, les moyens de modulation de l'acquisition sont réalisés sous la forme d'un tube intensificateur à gain variable. Toutefois, selon un mode de réalisation non revendiqué, les moyens de modulation de l'acquisition pourraient être réalisés sous une autre forme. Ainsi, par exemple, il pourrait être envisagé de mettre en tant que moyens de modulation de l'acquisition un atténuateur optique, tel que par exemple décrit dans le brevet US 7 224 881, piloté par l'unité 5. L'atténuateur pourra alors être placé contre la partie avant de la photocathode d'une caméra intensifiée utilisée comme capteur.

Par ailleurs, selon l'exemple décrit en relation avec la figure 1, le dispositif de mesure 1 est conçu pour travailler sur des échantillons. Toutefois, le dispositif de mesure peut être utilisé pour travailler sur des petits mammifères comme le montre la figure 5. De même, la figure 6 montre une autre forme de réalisation du dispositif de mesure conçu pour travailler en réflexion. Les moyens d'illumination et d'acquisition étant alors situés d'un même côté de la zone de mesure 2.

Le dispositif de mesure et le procédé de mesure peuvent être utilisés pour diverses applications telles que par exemple la tomographie optique en milieu diffusant chez l'homme, chez l'animal ou tout autre milieu turbide en général. Le procédé et le dispositif de mesure peuvent également être utilisés en tomographie optique de fluorescence chez l'homme, chez l'animal ou tout autre milieu turpide en général qui aura fait l'objet d'une incorporation de fluorophores.

Le procédé et le dispositif de mesure peuvent également être utilisés dans le cadre d'un oxymètre optique. Pour cela, on réalise une cartographie du coefficient d'absorption $\mu a$ d'un milieu à caractériser, et cela en utilisant au moins 2 longueurs d'onde d'excitation, et de préférence 4 longueurs d'onde. Une telle détermination peut-être réalisée en se basant par exemple sur la détermination du coefficient d'absorption à partir des moments et de la transformée de Laplace de la fonction représentant l'histogramme H(t). On pourra consulter à ce sujet la publication [Schweiger - applied optics 97] ou la thèse d'Aurélie Laidevant. On peut ainsi se baser sur l'ouvrage "Tissue Optics Light scattering Methods and Instruments for Medical Diagnosis", Valery Tuchin, Tutorial texts in Optical Engineering, volume TT38, Spie press editeur, pour résoudre le système linéaire d'équations qui, pour chaque longueur d'onde d'excitation $\lambda_{ex-n}$, relie, à chaque point du milieu, les grandeurs suivantes :

$$\mu_a = c_{H2O}\sigma_{H2O} + c_f\sigma_f + c_{Hb}\sigma_{Hb} + c_{HbO}\sigma_{HbO}$$

$c_{H2O}$ = concentration en eau du milieu
$c_f$ = concentration en matière grasse du milieu
$c_{Hb}$ = concentration en hémoglobine désoxygénée du milieu
$c_{HbO}$ = concentration en hémoglobine oxygénée du milieu
$\sigma_{H2O}$ = section efficace d'absorption de l'eau dans le milieu à la longueur d'onde $\lambda_{ex-n}$,
$\sigma_f$ = section efficace d'absorption de la matière grasse dans le milieu à la longueur d'onde $\lambda_{ex-n}$,
$\sigma_{Hb}$ = section efficace d'absorption de l'hémoglobine désoxygénée dans le milieu à la longueur d'onde $\lambda_{ex-n}$
$\sigma_{HbO}$ = section efficace d'absorption de l'hémoglobine soxygénée dans le milieu à la longueur d'onde $\lambda_{ex-n}$

Ainsi, connaissant $\sigma_{H2O}$, $\sigma_f$, $\sigma_{Hb}$, $\sigma_{HbO}$ pour chacune des quatre longueur d'onde d'excitation, et à partir de l'évaluation du coefficient d'absorption $\mu_a$ du point du milieu considéré à partir de 4 mesures réalisées auxdites 4 longueurs d'ondes , il est possible d'obtenir les concentrations respectives en eau, matière grasse, hémoglobine desoxygénee et hémoglobine oxygénée, et, ce faisant, évaluer par exemple la saturation en hémoglobine $S_{O2}$ selon l'expression

$$S_{O_2}(\%) = \frac{c_{HbO2}}{c_{Hb} + c_{HbO2}} * 100$$

On obtiendra ainsi un coefficient de saturation en chaque point du milieu. On entend par point du milieu un volume élémentaire du milieu déterminé par le maillage effectué pour reconstruire la carte d'absorption $\mu_a$.
On peut également réaliser une détermination d'un coefficient de saturation en hémoglobine moyen d'un milieu, en réalisant 4 évaluations du coefficient d'absorption moyen du milieu à 4 longueurs d'onde différentes, puis résoudre les 4 équations reliant respectivement, à une longueur d'onde donnée, le coefficient d'absorption moyen $\mu_a$ aux concentrations moyennes en eau, matière grasse, hémoglobine désoxygénée et hémoglobine oxygénée.
Une autre possiblité d'application est de n'utiliser que deux longueurs d'onde d'excitation, et négliger ainsi $c_{H2O}$ et $c_f$, en choisissant les longueurs d'onde dans une zone où l'absorption due à l'eau et à la matière grasse est négligeable devant l'absorption due à l'hémoglobine, oxygénée ou non. Nous obtenons alors, à chaque longueur d'onde d'excitation $\lambda_{ex-n}$ l'équation :

$$\mu_a = c_{Hb}\sigma_{Hb} + c_{HbO}\sigma_{HbO}$$

et cela pour chaque point du milieu, un point du milieu étant déterminé par le maillage effectué pour reconstruire la carte d'absorption $\mu_a$.
On résoud ensuite l'équation suivante afin d'obtenir le coefficient de saturation en chaque point du milieu :

$$S_{O_2}(\%) = \frac{c_{HbO2}}{c_{Hb} + c_{HbO2}} * 100$$

On peut également réaliser une détermination d'un coefficient de saturation en hémoglobine moyen d'un milieu, en réalisant 2 évaluations du coefficient d'absorption moyen du milieu à 2 longueurs d'onde différentes, puis résoudre les 2 équations reliant respectivement, à une longueur d'onde donnée, le coefficient d'absorption moyen $\mu_a$ aux concentrations moyennes en hémoglobine désoxygénée et hémoglobine oxygénée.
Selon l'exemple décrit en relation avec la figure 2, les moyens intégrés 8 de modulation et d'acquisition comprennent une surface photo sensible émettant des électrons suivie de trois étages accélération des électrons la modulation du gain ou de la sensibilité étant assurée en faisant varier la tension au sein de la galette de mircrocanaux. Toutefois, la modulation de la sensibilité peut également être assurée en faisant varier la tension au niveau de la photocathode. De même, les moyens de modulation de l'acquisition pourraient être réalisés autrement et, par exemple, comprendre simplement une photocathode, une galette de microcanaux et une anode. La modulation du gain ou de la sensibilité peut alors être assurée en agissant sur la tension de la photocathode.
Les moyens de modulation de l'acquisition pourraient également comprendre plusieurs galettes de microcanaux avec une ou plusieurs électrodes intercalées entre deux galettes successives. La modulation du gain sera alors obtenue en faisant varier la tension de chaque électrode intercalaire.

Selon l'exemple de réalisation décrit précédemment la source de lumière est une source pulsée comprenant une cavité laser qui génère un rayonnement « naturellement » pulsé. Une telle source lumineuse pulsée émet donc des impulsions lumineuses successives. Chaque impulsion sera alors préférentiellement subnanoseconde. On remarquera également que l'acquisition modulée peut débuter lorsque la source lumineuse est allumée, mais on comprendra que la partie la plus significative, voire la totalité de l'acquisition ait lieu durant les phases où la source lumineuse est éteinte, entre deux impulsions lumineuses successives de la source impulsionnelle. D'une façon générale, on procédera à une acquisition modulée d'image entre chaque impulsion lumineuse et l'impulsion lumineuse suivante. Réaliser la partie la plus significative de l'acquisition en dehors de la phase d'illumination signifie qu'au moins 80%, de préférence au moins 90%, de la durée d'acquisition est réalisée pendant que la source lumineuse est éteinte. De façon préférée, la totalité de l'acquisition est réalisée lorsque la source lumineuse est éteinte.

Bien entendu, il pourrait aussi être envisagé d'utiliser une source de lumière monochromatique ou quasi monochromatique ayant une autre longueur d'onde que celle évoquée précédemment ainsi qu'un taux de répétition différent. Il pourrait également être envisagé d'utiliser une source de lumière blanche. Toutefois dans la mesure où les rayonnements dans le rouge et le proche infrarouge sont connus pour présenter de bons taux de pénétration dans les tissus organiques, il sera de préférence utilisé des sources de lumière ayant des longueurs d'onde comprises entre 620 nm et 2500 nm.

Le procédé et le dispositif de mesure pourront être utilisés dans différentes applications de l'imagerie optique en milieu diffus, et notamment dans des applications de tomographie.

Par ailleurs, il sera possible de trouver des informations concernant l'imagerie optique diffuse dans les publications suivantes :

Schweiger, Arridge, "Direct Calculation with a finite-elemnt method of the Laplace transform of the distribution of photon time of flight in tissue" Applied Optics 97, Vol 36, N° 34, 1 december 1997

Gributs, Burns, Applied Optics 03 "Haar transform analysis of photon time-of-flight measurements for quantification of optical properties in scattering média", Applied Optics 03, Vol 42, N° 16, 1 June 2003

## Revendications

1. Procédé de mesure de caractéristiques optiques d'un objet situé dans une zone de mesure (2), le procédé comprenant les opérations suivantes :

- illumination de l'objet au moyen d'une source lumineuse pulsée subnanoseconde par émission d'un rayonnement lumineux en direction de la zone de mesure (2),
- acquisition d'une image par une détection modulée de rayonnements lumineux en provenance de l'objet consécutivement à l'illumination à l'aide de moyens (6) d'acquisition d'une image de la zone de mesure qui comprennent un capteur d'acquisition (7,10) comprenant au moins un pixel et adapté pour acquérir au moins une mesure en au moins un point ou pixel et à l'aide d'une unité (5) de contrôle et d'acquisition qui est synchronisée avec la source lumineuse et raccordée au capteur d'acquisition (7,10),
la détection étant modulée selon une fonction de modulation d'acquisition G(t) temporelle continue et non sinusoïdale,
la détection étant modulée par des moyens (8) de modulation de l'acquisition interposés entre le capteur (7,10) et la zone de mesure (2), les moyens (8) de modulation de l'acquisition étant commandés, à chaque acquisition, par l'unité (5) de contrôle et d'acquisition qui est, également, raccordée aux moyens (8) de modulation de l'acquisition, les moyens de modulation de l'acquisition (8) comprenant un intensificateur d'image et des moyens de contrôle du gain de l'intensificateur pilotés par l'unité de contrôle et d'acquisition (5) qui est adaptée pour faire varier, pendant une période d'acquisition s'écoulant de $t_0$ à $t_0+T$, le gain de l'intensificateur conformément à la fonction de modulation de l'acquisition G(t),
laquelle acquisition est réalisée entre deux impulsions lumineuses successives de la source lumineuse, et laquelle acquisition, d'une durée T comprise entre 5 nanosecondes et 10 nanosecondes, comprend, pour chaque point ou pixel de l'image, l'établissement d'une grandeur S, correspondant à une quantité de lumière relative à une caractéristique optique, telle que

$$S = \int_{t_0}^{t_0+T} G(t)H(t)dt$$

où H(t) est un histogramme de temps d'arrivée de photons au niveau du point ou pixel considéré, et $t_0$ correspond sensiblement à l'instant d'émission d'une impulsion de la source lumineuse, et telle que la quantité de lumière reçue au niveau de chaque pixel du capteur (7,10) correspond à la grandeur S, la fonction G(t) de modulation de l'acquisition étant choisie pour faire varier le gain de l'intensificateur parmi les fonctions suivantes :

- $G_k(t) = at^k$ où a est un nombre réel positif et k un nombre entier ;
- $G_c(t) = a'e^{-tc}$ où a' est un nombre réel positif et c un nombre réel ;
- G(t) est une ondelette.

**2.** Procédé selon la revendication 1, **caractérisé en ce qu'**au moins 80%, de préférence au moins 90%, voire 100% de l'acquisition est réalisée pendant que la source lumineuse est éteinte.

**3.** Procédé selon l'une des revendications précédentes, **caractérisé en ce qu'**il comprend :

- plusieurs phases d'illumination et d'acquisition modulées avec enregistrement à chaque phase d'une image
- et une étape de reconstruction des caractéristiques optiques de l'objet à partir des images enregistrées.

**4.** Procédé selon l'une des revendications précédentes, **caractérisée en ce que** chaque image enregistrée est bidimensionnelle.

**5.** Procédé selon l'une des revendications précédentes, **caractérisé en ce que** l'objet comprend au moins un marqueur fluorescent.

**6.** Dispositif de mesure de caractéristiques optiques d'un objet (O) situé dans une zone de mesure (2), comprenant :

- une source de lumière pulsée subnanoseconde (3) adaptée pour émettre un rayonnement lumineux en direction de la zone de mesure (2),
- des moyens(6) d'acquisition d'une image de la zone de mesure qui comprennent un capteur (7,10) adapté pour acquérir au moins une mesure en au moins un point ou pixel, et des moyens (8) de modulation de l'acquisition interposés entre le capteur (7,10) et la zone de mesure (2),
- une unité (5) de contrôle et d'acquisition qui est synchronisée avec la source lumineuse et raccordée au capteur d'acquisition (7,10) et aux moyens (8) de modulation de l'acquisition, et qui est adaptée pour effectuer l'acquisition entre deux impulsions lumineuses successives de la source lumineuse et pour commander, à chaque acquisition, les moyens de modulation de l'acquisition (8) selon une fonction de modulation d'acquisition G(t) temporelle continue et non sinusoïdale de façon à établir une grandeur S, correspondant à une quantité de lumière relative à une caractéristique optique, telle que

$$ S = \int_{t_0}^{t_0+T} G(t)H(t)dt $$

où H(t) est un histogramme de temps d'arrivée de photons au niveau du point ou pixel considéré, et $t_0$ correspond sensiblement à l'instant d'émission d'une impulsion de la source de lumière (3) et T une durée comprise entre 5 nanosecondes et 10 nanosecondes, et telle que la quantité de lumière reçue au niveau de chaque pixel du capteur (7,10) correspond à la grandeur S, les moyens de modulation de l'acquisition (8) comprenant un intensificateur d'image et des moyens de contrôle du gain de l'intensificateur pilotés par l'unité de contrôle et d'acquisition (5) qui est adaptée pour faire varier, pendant une période d'acquisition s'écoulant de $t_0$ à $t_0+T$, le gain de l'intensificateur conformément à la fonction de modulation de l'acquisition G(t), la fonction G(t) de modulation de l'acquisition étant choisie pour faire varier le gain de l'intensificateur parmi les fonctions suivantes :

- $G_k(t) = at^k$ où a est un nombre réel positif et k un nombre entier ;
- $G_c(t) = a'e^{-tc}$ où a' est un nombre réel positif et c un nombre réel ;
- G(t) est une ondelette.

7. Dispositif selon la revendication 6, **caractérisé en ce que** l'unité de contrôle (5) est adaptée pour effectuer au moins 80%, de préférence au moins 90%, voire 100%, de l'acquisition pendant que la source lumineuse est éteinte.

8. Dispositif selon l'une des revendications 6 à 7, **caractérisé en ce que** le capteur est adapté pour acquérir plusieurs mesures en plusieurs points ou pixels.

9. Dispositif selon l'une des revendications 6 à 8, **caractérisé en ce que** la source lumineuse (3) et les moyens d'acquisition (6) sont disposés de part et d'autre de la zone de mesure (2).

10. Dispositif selon l'une des revendications 6 à 8, **caractérisé en ce que** la source lumineuse (3) et les moyens d'acquisition (6) sont disposés d'un même côté de la zone de mesure (2).


**Patentansprüche**

1. Verfahren zur Messung optischer Eigenschaften eines Gegenstands, der sich in einem Messbereich (2) befindet, wobei das Verfahren die folgenden Schritte umfasst:

   - Beleuchten des Gegenstands mit einer gepulsten Lichtquelle im Subnanosekundenbereich durch Emission von Lichtstrahlung in Richtung des Messbereichs (2),
   - Erfassen eines Bildes durch eine modulierte Detektion von Lichtstrahlen, die vom Gegenstand kommen, im Anschluss an die Beleuchtung mit Hilfe von Mitteln (6) zur Erfassung eines Bildes des Messbereichs, die einen Erfassungssensor (7,10) umfassen, der wenigstens ein Pixel umfasst und dazu ausgelegt ist, wenigstens eine Messung in wenigstens einem Punkt oder Pixel zu erfassen, und mit Hilfe einer Steuer- und Erfassungseinheit (5), die mit der Lichtquelle synchronisiert und mit dem Erfassungssensor (7,10) verbunden ist, wobei die Detektion gemäß einer stetigen, nicht sinusförmigen zeitlichen Erfassungsmodulationsfunktion G(t) moduliert wird, wobei die Detektion durch Mittel (8) zur Modulation der Erfassung moduliert wird, die zwischen dem Sensor (7,10) und dem Messbereich (2) angeordnet sind, wobei die Mittel (8) zur Modulation der Erfassung bei jeder Erfassung von der Steuer- und Erfassungseinheit (5) gesteuert werden, die ebenfalls mit den Mitteln (8) zur Modulation der Erfassung verbunden ist, wobei die Mittel zur Modulation der Erfassung (8) einen Bildverstärker und Mittel zur Steuerung der Verstärkung des Verstärkers umfassen, die von der Steuer- und Erfassungseinheit (5) gesteuert werden, welche dazu ausgelegt ist, die Verstärkung des Verstärkers gemäß der Funktion zur Modulation der Erfassung G(t) während eines Erfassungszeitraums von $t_0$ bis $t_0 + T$ zu variieren, wobei die Erfassung zwischen zwei aufeinanderfolgenden Lichtimpulsen der Lichtquelle durchgeführt wird und die Erfassung einer Dauer T zwischen 5 Nanosekunden und 10 Nanosekunden für jeden Punkt oder jedes Pixel des Bildes die Bestimmung einer Größe S umfasst, die einer auf eine optische Eigenschaft bezogenen Lichtmenge entspricht, so dass

$$S = \int_{t_0}^{t_0+T} G(t)H(t)dt \ ,$$

   worin H(t) ein Histogramm der Eintreffzeit von Photonen auf Höhe des betrachteten Punktes oder Pixels ist und $t_0$ im Wesentlichen dem Zeitpunkt der Emission eines Impulses der Lichtquelle entspricht, und so, dass die auf Höhe jedes Pixels des Sensors (7,10) empfangene Lichtmenge der Größe S entspricht, wobei die Funktion G(t) für Modulation der Erfassung unter folgenden Funktionen ausgewählt ist, um die Verstärkung des Verstärkers zu variieren:

   - $G_k(t) = at^k$, wobei a eine positive reale Zahl und k eine ganze Zahl ist;
   - $G_c(t) = a'e^{-tc}$, wobei a' eine positive reale Zahl und c eine reale Zahl ist;
   - G(t) ein Wavelet ist.

2. Verfahren nach Anspruch 1, **dadurch gekennzeichnet, dass** wenigstens 80%, vorzugsweise wenigstens 90%, oder sogar 100% der Erfassung erfolgen, während die Lichtquelle ausgeschaltet ist.

3. Verfahren nach einem der vorhergehenden Ansprüche, **dadurch gekennzeichnet, dass** es umfasst:

- mehrere modulierte Beleuchtungs- und Erfassungsphasen mit Aufzeichnung eines Bildes in jeder Phase
- und einen Schritt zur Rekonstruktion der optischen Eigenschaften des Gegenstands anhand der aufgezeichneten Bilder.

**4.** Verfahren nach einem der vorhergehenden Ansprüche, **dadurch gekennzeichnet, dass** jedes aufgezeichnete Bild zweidimensional ist.

**5.** Verfahren nach einem der vorhergehenden Ansprüche, **dadurch gekennzeichnet, dass** der Gegenstand wenigstens einen Fluoreszenzmarker umfasst.

**6.** Vorrichtung zur Messung optischer Eigenschaften eines Gegenstands (0), der sich in einem Messbereich (2) befindet, wobei die Vorrichtung umfasst:

- eine gepulste Lichtquelle im Subnanosekundenbereich (3), die dazu ausgelegt ist, Lichtstrahlung in Richtung des Messbereichs (2) zu emittieren,
- Mittel (6) zur Erfassung eines Bildes des Messbereichs, die einen Sensor (7,10) umfassen, der dazu ausgelegt ist, wenigstens eine Messung in wenigstens einem Punkt oder Pixel zu erfassen, und Mittel (8) zur Modulation der Erfassung, die zwischen dem Sensor (7,10) und dem Messbereich (2) angeordnet sind,
- eine Steuer- und Erfassungseinheit (5), die mit der Lichtquelle synchronisiert und mit dem Erfassungssensor (7,10) und den Mitteln (8) zur Modulation der Erfassung verbunden ist und die dazu ausgelegt ist, die Erfassung zwischen zwei aufeinanderfolgenden Lichtimpulsen der Lichtquelle durchzuführen und bei jeder Erfassung die Mittel zur Modulation der Erfassung (8) gemäß einer stetigen, nicht sinusförmigen zeitlichen Erfassungsmodulationsfunktion G(t) so zu steuern, dass eine Größe S bestimmt wird, die einer auf eine optische Eigenschaft bezogenen Lichtmenge entspricht, so dass

$$S = \int_{t_0}^{t_0+T} G(t)H(t)dt \text{ ,}$$

worin H(t) ein Histogramm der Eintreffzeit von Photonen auf Höhe des betrachteten Punktes oder Pixels ist und $t_0$ im Wesentlichen dem Zeitpunkt der Emission eines Impulses der Lichtquelle (3) und T einer Dauer zwischen 5 Nanosekunden und 10 Nanosekunden entspricht, und
so dass die auf Höhe jedes Pixels des Sensors (7,10) empfangene Lichtmenge der Größe S entspricht,
wobei die Mittel (8) zur Modulation der Erfassung einen Bildverstärker und Mittel zur Steuerung der Verstärkung des Verstärkers umfassen, die von der Steuer- und Erfassungseinheit (5) gesteuert werden, welche dazu ausgelegt ist, die Verstärkung des Verstärkers gemäß der Funktion zur Modulation der Erfassung G(t) während eines Erfassungszeitraums von $t_0$ bis $t_0$ + T zu variieren, wobei die Funktion G(t) zur Modulation der Erfassung so unter den folgenden Funktionen ausgewählt ist, dass die Verstärkung des Verstärkers variiert:

- $G_k(t) = at^k$, wobei a eine positive reale Zahl und k eine ganze Zahl ist;
- $G_c(t) = a'e^{-tc}$, wobei a' eine positive reale Zahl und c eine reale Zahl ist;
- G(t) ein Wavelet ist.

**7.** Vorrichtung nach Anspruch 6, **dadurch gekennzeichnet, dass** die Steuereinheit (5) dazu ausgelegt ist, wenigstens 80%, vorzugsweise wenigstens 90%, oder sogar 100% der Erfassung zu bewirken, während die Lichtquelle ausgeschaltet ist.

**8.** Vorrichtung nach einem der Ansprüche 6 bis 7, **dadurch gekennzeichnet, dass** der Sensor dazu ausgelegt ist, mehrere Messungen in mehreren Punkten oder Pixeln zu erfassen.

**9.** Vorrichtung nach einem der Ansprüche 6 bis 8, **dadurch gekennzeichnet, dass** die Lichtquelle (3) und die Erfassungsmittel (6) zu beiden Seiten des Messbereichs (2) angeordnet sind.

**10.** Vorrichtung nach einem der Ansprüche 6 bis 8, **dadurch gekennzeichnet, dass** die Lichtquelle (3) und die Erfassungsmittel (6) auf derselben Seite des Messbereichs (2) angeordnet sind.

**Claims**

1. Method for measuring optical characteristics of an object situated in a measurement zone (2), the method comprising the following operations:

   - illumination of the object by means of a subnanosecond pulsed light source by emission of light rays in the direction towards the measurement zone (2),
   - acquisition of an image by modulated detection of light rays coming from the object following the illumination with the aid of means (6) of acquisition of an image of the measurement zone which comprise an acquisition sensor (7, 10) comprising at least one pixel and adapted to acquire at least one measurement at at least one point or pixel, and with the aid of a control and acquisition unit (5) which is synchronised with the light source and connected to the acquisition sensor (7, 10),
   the detection being modulated according to a temporal, continuous and non-sinusoidal acquisition modulation function G(t),
   the detection being modulated by acquisition modulation means (8) interposed between the sensor (7, 10) and the measurement zone (2), the acquisition modulation means (8) being controlled, at each acquisition, by the control and acquisition unit (5), which is also connected to the acquisition modulation means (8), the acquisition modulation means (8) comprising an image intensifier and means for controlling the gain of the intensifier which are controlled by the control and acquisition unit (5), which is adapted to vary, during an acquisition period which runs from $t_0$ to $t_0+T$, the gain of the intensifier in accordance with the acquisition modulation function G(t), which acquisition is carried out between two successive light pulses of the light source, and which acquisition, which has a duration T of between 5 nanoseconds and 10 nanoseconds, comprises, for each point or pixel of the image, the establishment of a value S corresponding to a quantity of light relative to an optical characteristic, such that

$$S = \int_{t_0}^{t_0+T} G(t)H(t)dt$$

   where H(t) is a histogram of arrival times of photons at the point or pixel in question, and $t_0$ corresponds substantially to the time of emission of a pulse of the light source, and such that the quantity of light received at each pixel of the sensor (7, 10) corresponds to the value S,
   the acquisition modulation function G(t) being chosen to vary the gain of the intensifier from the following functions:

   - $G_k(t) = at^k$ where a is a positive real number and k is an integer;
   - $G_c(t) = a'e^{-tc}$ where a' is a positive real number and c is a real number;
   - G(t) is a wavelet.

2. Method according to claim 1, **characterised in that** at least 80%, preferably at least 90%, or even 100%, of the acquisition is carried out while the light source is extinguished.

3. Method according to any one of the preceding claims, **characterised in that** it comprises:

   - a plurality of modulated illumination and acquisition phases, with an image being recorded in each phase,
   - and a step of reconstruction of the optical characteristics of the object on the basis of the recorded images.

4. Method according to any one of the preceding claims, **characterised in that** each recorded image is two-dimensional.

5. Method according to any one of the preceding claims, **characterised in that** the object comprises at least one fluorescent marker.

6. Device for measuring optical characteristics of an object (O) situated in a measurement zone (2), comprising:

   - a subnanosecond pulsed light source (3) adapted to emit light rays in the direction towards the measurement zone (2),
   - means (6) of acquisition of an image of the measurement zone which comprise a sensor (7, 10) adapted to acquire at least one measurement at at least one point or pixel, and acquisition modulation means (8) interposed between the sensor (7, 10) and the measurement zone (2),
- a control and acquisition unit (5) which is synchronised with the light source and connected to the acquisition sensor (7, 10) and to the acquisition modulation means (8) and which is adapted to carry out the acquisition between two successive light pulses of the light source and to control, at each acquisition, the acquisition modulation means (8) in accordance with a temporal, continuous and non-sinusoidal acquisition modulation function G(t) so as to establish a value S corresponding to a quantity of light relative to an optical characteristic, such that

$$S = \int_{t_0}^{t_0+T} G(t)H(t)dt$$

where H(t) is a histogram of arrival times of photons at the point or pixel in question, and $t_0$ corresponds substantially to the time of emission of a pulse of the light source (3), and T is a duration between 5 nanoseconds and 10 nanoseconds, and
such that the quantity of light received at each pixel of the sensor (7, 10) corresponds to the value S,
the acquisition modulation means (8) comprising an image intensifier and means for controlling the gain of the intensifier which are controlled by the control and acquisition unit (5), which is adapted to vary, during an acquisition period which runs from $t_0$ to $t_0+T$, the gain of the intensifier in accordance with the acquisition modulation function G(t),
the acquisition modulation function G(t) being chosen to vary the gain of the intensifier from the following functions:

- $G_k(t) = at^k$ where a is a positive real number and k is an integer;
- $G_c(t) = a'e^{-tc}$ where a' is a positive real number and c is a real number;
- G(t) is a wavelet.

**7.** Device according to claim 6, **characterised in that** the control unit (5) is adapted to carry out at least 80%, preferably at least 90%, or even 100%, of the acquisition while the light source is extinguished.

**8.** Device according to either claim 6 or claim 7, **characterised in that** the sensor is adapted to acquire a plurality of measurements at a plurality of points or pixels.

**9.** Device according to any one of claims 6 to 8, **characterised in that** the light source (3) and the acquisition means (6) are arranged on either side of the measurement zone (2).

**10.** Device according to any one of claims 6 to 8, **characterised in that** the light source (3) and the acquisition means (6) are arranged on the same side of the measurement zone (2).

Fig.1

Fig.6

**Fig.5**

**Fig.2**

**Fig.3**

G

G(t)

N

4a

G⁺

G₊(t)

4b

G⁻

|G₋(t)|

4c

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5485530 A
- GB 2416945 A

- US 7224881 B


**Littérature non-brevet citée dans la description**

- **SOLOVIEV.** Fluorescence lifetime imaging by using time-gated data acquisition. *Applied Optics,* 2007, vol. 46 (30), 7384-7391
- Instrumentation for real-time fluorescence lifetime imaging in endoscopy. **J. MIZERET et al.** REVIEW OF SCIENTIFIC INSTRUMENTS. AIP, 01 Décembre 1999, vol. 70, 4689-4701
- **A. LAIDEVANT et al.** Time-Resolved Imaging of a Fluorescent Inclusion in a Turbid Medium Using a Gated CCD Caméra. *BIOMEDICAL TOPICAL MEETING,* 2006, SH52
- Time-resolved optical imaging through turbid media using a fast data acquisition systme based on a gated CCD camera. **D'ANDREA C et al.** JOURNAL OF PHYSICS D (APPLIED PHYSICS). IOP PUBLISHING, 21 Juillet 2003, vol. 36, 1675-1681
- **GRIBUTS C E W et al.** Optical property détermination of turbid media by time-resolved transmittance measurements and wavelet transform analysis. *CANADIAN JOURNAL OF ANALYTICAL SCIENCES AND SPECTROSCOPY SPECTROSC. SOC.,* 2004, vol. 49 (3), ISSN 1205-6685, 193-201

- **TURNER GORDON et al.** MEDICAL PHYSICS. AIP, 21 Mars 2007, vol. 34, 1405-1411
- Application of temporal filterst o time resolved data in optical tomography. **SCHWEIGER M et al.** PHYSICS IN MEDICINE AND BIOLOGY. IOP PUBLISHING, 07 Juillet 1999, vol. 44, 1699-1717
- **F. LAN ; S. LESSAGE ; X. INTES.** *Time Domain fluorescent Diffuse Optical Tomography : analytical expressions,* 04 Avril 2005, vol. 13 (7), 2263
- **SCHWEIGER ; ARRIDGE.** Direct Calculation with a finite-elemnt method of the Laplace transform of the distribution of photon time of flight in tissue. *Applied Optics,* 01 Décembre 1997, vol. 36 (34), 97
- **GRIBUTS ; BURNS.** Haar transform analysis of photon time-of-flight measurements for quantification of optical properties in scattering média. *Applied Optics,* 01 Juin 2003, vol. 42 (16), 03